# EUROPÄISCHE PATENTSCHRIFT

(11) **EP 2 702 261 B1**
(45) Veröffentlichungstag und Bekanntmachung des Hinweises auf die Patenterteilung: **07.03.2018**
(21) Anmeldenummer: 12717111.4
(22) Anmeldetag: 23.04.2012
(51) Int. Cl.: F02M 35/02, F02M 35/024, F02M 35/022, B01D 50/00

(54) **LUFTFILTERELEMENT UND GEHÄUSE FÜR EIN LUFTFILTERELEMENT**
AIR FILTER ELEMENT AND HOUSING FOR AIR FILTER ELEMENT
ÉLÉMENT DE FILTRATION D'AIR ET BOÎTIER POUR ÉLÉMENT DE FILTRATION D'AIR

(30) Priorität: 26.04.2011 DE 102011018715
(43) Veröffentlichungstag der Anmeldung: 05.03.2014
(73) Patentinhaber: MANN + HUMMEL GMBH, 71636 Ludwigsburg (DE)
(72) Erfinder: KAUFMANN, Michael, 67149 Meckenheim (DE); RUHLAND, Klaus-Dieter, 67149 Meckenheim (DE)
(86) Internationale Anmeldenummer: PCT/EP2012/057375
(87) Internationale Veröffentlichungsnummer: WO 2012/146557

(56) Entgegenhaltungen:
- EP-A1- 1 364 695
- EP-A1- 1 992 395
- EP-A2- 1 843 035
- WO-A1-2007/081426
- WO-A1-2009/106588
- DE-A1-102008 062 955
- DE-U1-202009 000 969

## Beschreibung

### Technisches Gebiet

Die vorliegende Erfindung bezieht sich auf ein Filterelement, wie z.B. ein Luftfilterelement, insbesondere für einen mehrstufigen Filter, welcher einen Zyklonfilter umfasst.

### Stand der Technik

Zyklonfilter, auch Fliehkraftabscheider, Zyklon oder Zyklonabscheider genannt, dienen zur Absonderung von in Gasen enthaltenen festen oder flüssigen Partikeln. Im Zyklonfilter werden die Gase mit den Partikeln durch eine entsprechende konstruktive Gestaltung in eine Drehbewegung versetzt. Die auf die Partikel wirkenden Zentrifugalkräfte beschleunigen diese radial nach außen. Sie werden dadurch vom Gasstrom getrennt, der nach innen geleitet und abgeführt wird.

Wegen der im Vergleich zu anderen Verfahren nur mäßigen Filterleistung bei feinsten Partikeln wird die Zyklonfilterung oft als Teil einer Filterkette eingesetzt. Zur Abscheidung von Feinstäuben ist es möglich, zusätzlich zum Zyklonfilter ein konventionelles Filterelement vorzusehen. Die durch die Zyklonfilterung vorgereinigte Luft wird durch das Filtermedium des Filterelements gefördert, wobei sich Verunreinigungen der Luft am Filtermedium ablagern. Auf diese Weise kann die Filterleistung der sich ergebenden Filteranordnung gesteigert werden.

Konventionelle Filterelemente sind teilweise unzureichend an die speziellen Anforderungen für den Einsatz als Endfilter, d.h. einer der Zyklonfilterung nachgeschalteten Luftfilterung, angepasst. Insbesondere kann ein Problem darin bestehen, dass die Luft nach der Zyklonfilterung verwirbelt ist. Dadurch wird das Filtermedium des Filterelements ungleichmäßig durchströmt, was die Filterwirkung mindert. Eine Zyklonvorfilterung kann zudem die Einbausituation des für die Reinfilterung vorgesehenen Filterelements erschweren.

Ferner sind konventionelle Filterelemente verbreitet mit Filtermedien mit Querschnitten in ebener, runder oder ovaler Form ausgestattet. Dadurch ist die zur Verfügung stehende Filteroberfläche des Filtermediums nicht immer optimal genutzt, da meist eine möglichst große Filteroberfläche gewünscht wird.

Es sind z.B. Filterelemente mit nichtkreisförmigen Filtermedien bekannt. Diese werden in der Regel mit einer radialen Dichtung mittels Verspannung gegen ein Filtergehäuse abgedichtet. Wird die Verspannung zwischen Filterelement und Gehäuse dabei gelöst, ist die Dichtigkeit der Verbindung von Gehäuse und Filterelement nicht mehr gegeben. Ein Beispiel eines Filterelements mit dreiecksförmigem Querschnitt ist aus der DE 20 2009 000 969 U1 bekannt geworden.

Oft werden technische Systeme, bestehend z.B. aus einem Verbrennungsmotor und dem vorgeschalteten Luftfilter zur Reinigung der Zuluft zum Verbrennungsraum des Verbrennungsmotors, als Gesamtsystem entwickelt. Daraus ergeben sich oft spezifische Anforderungen an den Reinheitsgrad der dem Verbrennungsmotor zugeführten Luft und damit auch an die Filterleistung des vorgeschalteten Luftfilters. Ein kombiniertes Reinigungssystem für die Verbrennungsluft eines Verbrennungsmotors ist in der EP 1 364 695 A1 beschrieben.

### Offenbarung der Erfindung

Es ist daher Aufgabe der vorliegenden Erfindung, ein verbessertes Luftfilterelement, insbesondere für einen mehrstufigen Filter, welcher einen Zyklonfilter umfasst, zur Verfügung zu stellen.

Diese Aufgabe wird durch ein Filterelement mit den Merkmalen des Patentanspruchs 1 und ein Gehäuse mit den Merkmalen des Patentanspruchs 12 gelöst.

Ein demgemäßes Filterelement, welches als Luftfilterelement für einen Verbrennungsmotor ausgebildet ist, umfasst ein Filtermedium und eine Dichtung zum dichten Anschließen an ein Gehäuse, wobei das Filtermedium einen im Wesentlichen dreiecksförmigen Ringquerschnitt mit abgerundeten Ecken aufweist, der sich um seine Längserstreckungsachse erstreckt und in Richtung seiner Längserstreckungsachse konisch ausgebildet ist.

Das vorgeschlagene Luftfilterelement ermöglicht insbesondere, das Luftfilterelement mit einem Filtermedium mit unrundem Querschnitt kreisförmig gegen ein Gehäuse sicher haltend abzudichten.

Unter im Wesentlichen dreiecksförmig soll hier auch dreiecksförmig mit gerundeten Ecken verstanden werden. Die Dreiecksform erlaubt eine hohe Stabilität in der Längserstreckungsrichtung bei wenigen Knickstellen. Die konische Form ermöglicht im Vergleich zu einem einfachen Querschnitt einen besonders gleichmäßigen Eintrag von gefilterten Partikeln über die gesamte Filtermediumsfläche. Ferner kann dadurch das Filtergehäuse gut in bestehende Freiräume eingepasst werden. Ein zu filterndes Fluid, wie verunreinigte Luft, tritt z.B. durch das Filtermedium von einem Außenraum in den konischen dreieckförmigen Innenraum des Filterelements ein und durch eine Ausströmöffnung, welche an die kreisförmige Dichtung gekoppelt ist, als Reinfluid aus. Erfindungsgemäß ist die Dichtung des Filterelements kreisrund gestaltet. Damit kann das Filterelement unabhängig von der Filtermediumsquerschnittsform einfach und kostengünstig angeschlossen werden. Dichtungen in kreisrunder Form sind standardisiert und kostengünstig verfügbar. Ein Vorteil einer kreisrunden Dichtung bei einem ansonsten nichtkreisförmigen Querschnitt des Filterelements kann ferner sein, dass der Ein- oder Ausbau vereinfacht ist. Kreisrunde Dichtungsgeometrien sind in der Regel auch nach deren Alterung noch robust. Gegenüber ovalen Dichtringen oder an den Querschnitt des Filterkörpers angepasste Dichtgeometrien hat eine kreisrunde Dichtung günstigere Dicht- und Alterungseigenschaften.

Beispielsweise weist die Dichtung eine radiale innere oder äußere Dichtfläche auf. Mittels der Dichtfläche kann das Filterelement dicht an einem Gehäuse angeschlossen werden. Die radiale Abdichtung ermöglicht eine besonders gute Abdichtung, die auch bei fehlendem axialen Anpressdruck des Filterelements an dem Gehäuse eine dichte Verbindung von Filterelement und Gehäuse ermöglicht. Die Dichtung kann dabei selbsthemmend mit dem Gehäuse zusammenwirken, wodurch ein versehentliches Lösen verhindert wird.

Gemäß einer weiteren Ausführungsform ist das Filtermedium wenigstens bereichsweise sterngefaltet. Das Filtermedium verläuft dabei zwischen den gerundeten Ecken des Dreiecks in Zickzackform, wodurch die verfügbare Filtermediumsoberfläche erhöht und die Einsatzdauer verlängert wird. Ferner kann bei geforderter Filtermediumsoberfläche das Luftfilterelement kompakter ausgeführt werden.

Bei einer weiteren Ausführungsform sind Verstärkungsrippen so vorgesehen, dass sie von dem Filtermedium eingefasst werden. Die Verstärkungsrippen sind bevorzugt formstabil aus Kunststoff ausgeführt. Die Verstärkungsrippen stützen das Filtermedium ab und tragen dadurch zur Formstabilität des Filtermediums bei.

Gemäß noch einer Ausführungsform ist die Dichtung an einem Dichtungssteg angeordnet, der die Dichtung abstützt. Der Dichtungssteg ist bevorzugt aus einem festen formstabilen Kunststoff, wie z.B. PVC, PP, PA, POM, PET, PPE oder Polycarbonat. Es eignet sich insbesondere PA6 als Material. Dadurch wird die Dichtung stabilisiert und bietet bei einem Fügen am Gehäuse einen höheren Widerstand.

Beispielsweise ist der Dichtungssteg mit den Verstärkungsrippen gekoppelt. Dadurch kann ein besonders formstabiler Verbund aus Dichtungssteg und Verstärkungsrippen erzielt werden.

Gemäß einer Ausführungsform ist axialseitig wenigstens eine im Wesentlichen formstabile Deckelendscheibe so vorgesehen, dass sie axial dichtend an dem Filtermedium angeordnet ist. Die Deckelscheibe bildet dabei eine Art stabilisierendes Gehäuse für das Filtermedium und ermöglicht die einfache Integration der Luftanschlüsse in das Luftfilterelement.

Gemäß einer weiteren Ausführungsform ist ein radial luftdurchlässiges formstabiles Mittelrohr vorgesehen, das von dem Filtermedium umschlossen wird. Dieses Mittelrohr bildet ein inneres Stützelement und ist bevorzugt mit dem Dichtungssteg verbunden. Das Mittelrohr trägt damit zur stabilen Einleitung der am Dichtungssteg wirkenden Fügekräfte, z.B. beim Zusammenfügen von Luftfilterelement und Gehäuse, in das Luftfilterelement bei. Erfindungsgemäß weist das Filterelement einen Querschnitt eines gerundeten Dreiecks auf, wobei sich das Filtermedium ringförmig geschlossen um eine Längserstreckungsachse des Filterelements herum erstreckt. Das Filtermedium ist dabei bevorzugt als Endlosfaltenbalg zwischen einer oberen und unteren Endscheibe angeordnet. Die Endscheiben sind bevorzugt fluiddicht mit dem Filtermedium, insbesondere an den Stirnseiten, welche durch die zickzackförmig verlaufenden Kanten des Filtermediums gebildet sind, verbunden und entlang der Längserstreckungsachse voneinander beabstandet.

In einer Ausführungsform erstreckt sich das Filterelement derart konisch bzw. in Form eines Kegelstumpfes entlang der Längserstreckungsachse, dass die vom Endlosfaltenbalg umschlossene Fläche auf der Seite der Deckelendscheibe größer ist als auf der Seite der zweiten, unteren Endscheibe. Die Deckelendscheibe weist damit auch eine größere Fläche auf als die untere, zweite Endscheibe.

Das Filtermedium ist z.B. aus Filtervlies, Cellulose oder Papier gefertigt.

In einer Ausführungsform weist das Filterelement formstabile Verstärkungsrippen auf, die von dem Filtermedium umschlossen sind und dieses in seiner Form stabilisieren. Das Filtermedium ist z.B. mit den Verstärkungsrippen verklebt oder liegt an diesen an. Bevorzugt stützen die Verstärkungsrippen das Filtermedium in und gegen eine Durchströmrichtung der Luft ab und tragen zur Formstabilität des Filtermediums bei. Erfindungsgemäß wird das Luftfilterelement axial endseitig der Längserstreckungsachse von einer als Deckelendscheibe bezeichneten Endscheibe begrenzt. Die Deckelendscheibe weist bevorzugt eine Ausströmöffnung für gefilterte Luft mit einem kreisrunden Dichtungssteg mit einer inneren oder äußeren radialen Dichtfläche zum dichten Anschließen an ein Filtergehäuse, z.B. an einen Ausströmstutzen, auf. Bevorzugt kann mittels der Dichtfläche das Luftfilterelement dicht am Gehäuse angeschlossen werden.

In einer Ausführungsform weist das Filterelement zwei Endscheiben auf, die dichtend mit den Stirnseiten des Filtermediums verbunden sind und dadurch beidseitig einen axialen Abschluss bilden, wodurch die Rohseite von der Reinseite getrennt wird. Bevorzugt ist die erste Endscheibe, welche aufgrund der konischen Form des Filterelements eine kleinere Fläche aufweist, geschlossen ausgeführt. Weiter bevorzugt weist die auf der Gegenseite angeordnete Deckelendscheibe aufgrund der konischen Form eine größere Fläche auf als die erste Endscheibe. Bevorzugt ist in dieser Deckelendscheibe eine insbesondere kreisförmige Ausströmöffnung für durch das Filtermedium gereinigte Luft mit einer Dichtung zur Abdichtung gegenüber einem Gehäuse angeordnet. Dadurch kann ein möglichst großer Ausströmquerschnitt erreicht werden.

Beispielsweise ist an dem Gehäuse ein entsprechender Stutzen vorgesehen, durch den die gereinigte Luft zum jeweiligen Verbrennungsmotor gelangen kann.

In einer Ausführungsform ist die Ausströmöffnung des Filterelements kreisförmig. Erfindungsgemäß befindet sich die Ausströmöffnung des Filterelements in der Deckelendscheibe nicht im Bereich des Flächenschwerpunkts der Deckelendscheibe. Erfindungsgemäß ist die Ausströmöffnung von dem Flächenschwerpunkt der Deckelendscheibe beabstandet angeordnet. Erfindungsgemäß ist die Ausströmöffnung des Filterelements exzentrisch in einer Deckelendscheibe angeordnet. Erfindungsgemäß ist der Dichtungssteg bzw. die insbesondere von dem Dichtungssteg umschlossene Ausströmöffnung ausgehend vom Flächenschwerpunkt oder Mittelpunkt in Richtung einer abgerundeten Ecke des durch das Filterelement gebildeten Dreiecks verschoben. Bevorzugt ist die Ausströmöffnung so exzentrisch angeordnet, dass der Dichtungssteg an die äußere Umrandung der Deckelendscheibe heranreicht, diese aber besonders bevorzugt nicht überragt.

Durch die geschilderten exzentrischen Anordnungen der Ausströmöffnung des Filterelements kann ein exzentrischer Luftauslass aus einem Filtergehäuse erreicht und gleichzeitig der für das Filtergehäuse zur Verfügung stehende Bauraum bestmöglich mit Filterfläche gefüllt werden. Ferner kann auf diese Weise der Dichtungssteg bzw. die durch ihn definierte Ausströmöffnung des Filterelements und damit auch die Auslassöffnung des Gehäuses näher zum Austrittsbereich einer Einlassleitung in das Gehäuse, insbesondere näher zum Austrittsbereich von zur Vorabscheidung dienenden Zyklonfilterstufen angeordnet werden, was einerseits Vorteile bei der optimalen Ausnutzung von begrenzten Bauräumen und andererseits Vorteile in Bezug auf den Druckverlust des Gesamtsystems haben kann. Durch die kreisrunde Ausführung der Dichtung kann eine gute und zuverlässige Abdichtung sichergestellt werden.

Bevorzugt ist eine Dichtung am Filterelement vorgesehen, die zumindest teilweise aus einem elastischen Material hergestellt ist. An der Dichtung ist bevorzugt eine radiale Dichtfläche vorgesehen. Die radiale Abdichtung ermöglicht eine besonders gute Abdichtung, die auch bei fehlendem axialen Anpressdruck des Luftfilterelements an ein Gehäuse eine dichte Verbindung von Luftfilterelement und Gehäuse ermöglicht.

In einer Ausführungsform umfasst das Filterelement ein formstabiles, radial luftdurchlässiges Mittelrohr, welches den Dichtungssteg abstützt und damit insbesondere die Stabilität des Filterelements erhöht.

Es wird ferner eine Filteraufnahme oder ein Filtergehäuse zur dichten Verbindung von einer Zyklonfilterstufe und einem Filterelement vorgeschlagen. Dabei ist das Gehäuse derart ausgestaltet, dass das Filterelement mit seiner Dichtung an einem Dichtungsflansch des Gehäuses radial dichtend anliegt und bevorzugt mit Hilfe des Gehäuses derart an der Zyklonfilterstufe zur Vorabscheidung vorgesehen ist, dass mit Hilfe der Zyklonfilterstufe vorgereinigtes Fluid durch das Filtermedium zu einer Auslassöffnung des Gehäuses geleitet wird.

Das Fluid ist bei einer Ausführungsform zu reinigende Verbrennungsluft für einen Verbrennungsmotor.

Das Gehäuse deckt somit zum einen das Luftfilterelement nach außen ab, und zum anderen leitet es die Luft, die aus einer Zyklonfilterstufe austritt, dem Luftfilterelement zu.

In das Gehäuse sind vorzugsweise eine oder mehrere Zyklonfilterstufen zur Vorreinigung des Fluids integriert.

In einer Ausführungsform besteht das Gehäuse aus zwei Gehäuseteilen, welche z.B. mit Hilfe einer oder mehreren Schnallen aneinandergehalten werden.

In einer Ausführungsform sind als Vorabscheider eine oder mehrere insbesondere parallele Zyklonfilterstufen in dem Gehäuse, insbesondere in einer der beiden Gehäusehälften integriert. Bevorzugt sind die Zyklonfilterstufen als Inline-Zyklonzellen ausgebildet. Besonders bevorzugt sind zwei parallele Inline-Zyklonzellen als Zyklonfilterstufe in einer Gehäusehälfte integriert.

Die Zyklonfilterstufen sind bevorzugt durch mehrere, bevorzugt zwei nebeneinander angeordnete, insbesondere rohrförmige Inline-Zyklonzellen gebildet, die axial entlang ihrer Mittelachsen durchströmt werden. Dabei wird im Inneren der Inline-Zyklonzellen bevorzugt durch ein an den Lufteinlassöffnungen angeordnetes Leitwerk eine schraubenförmige Strömung erzeugt, durch welche in der Luft enthaltene Partikel nach außen bewegt und dort abgeschieden werden.

Das Filterelement ist insbesondere so im Gehäuse angeordnet, dass die aus mindestens einer, bevorzugt aus beiden der Zyklonfilterstufen insbesondere parallel zu einer Endscheibe austretende Luftströmung und insbesondere tangential auf die abgerundete Ecke des Filtermediums trifft, welchem die Ausströmöffnung des Filterelements am nächsten ist.

Als tangential ist dabei insbesondere jede Konfiguration zu verstehen, bei welcher die Mittelachsen der Zyklonzellen parallel zu einer Tangente eines insbesondere gekrümmten Bereiches des ringförmig geschlossenen Filterbalges verlaufen, wobei die Tangente insbesondere im Wesentlichen parallel oder leicht geneigt zu einer Endscheibe des Filterelements verläuft. Dabei trifft bevorzugt ein Teil des aus einer Zyklonzelle austretenden Luftstroms direkt auf das Filtermedium im betreffenden Bereich. Weiter bevorzugt ist dabei die Mittelachse der Zyklonfilterstufen radial von der zu ihr parallelen Tangente des Filterelements nach außen, d.h. vom Filterelement weg beabstandet. Bevorzugt sind mehrere Zyklonzellen über die axiale Erstreckung des Filterelements zwischen Deckelendscheibe und Endscheibe, also entlang der Längserstreckungsrichtung des Filterelements so nebeneinander angeordnet, dass durch den durch die Zyklonzellen austretenden Luftstrom der Bereich des Filteremdiums zwischen Endscheibe und Deckelendscheibe im Wesentlichen vollständig überdeckt ist.

In einer Ausführungsform ist der Austrittsbereich der Zyklonfilterstufen in dem Bereich, in dem die aus den Zyklonfilterstufen austretende Luft auf das Filterelement trifft, in Richtung des Filterelements gebogen ausgestaltet.

In einer Ausführungsform ist die Ausströmöffnung des Filterelements derart exzentrisch angeordnet, dass sie, insbesondere in einer Ebene senkrecht zur Längserstreckungsrichtung des Filterelements betrachtet, dem Austrittsbereich der Zyklonfilterstufen näher ist als der Flächenschwerpunkt der Deckelendscheibe.

In einer Ausführungsform weist das Gehäuse innenseitig an einem Gehäuseteil einen kreisrunden Dichtungssteg auf, an dem ein eingesetztes Filterelement im montierten Zustand insbesondere radial von außen oder innen dicht zum Anliegen kommen kann. Das andere Gehäuseteil schließt das Gehäuse und bildet in diesem Fall eine Abdeckung für das Luftfilterelement.

In einer Ausführungsform sind im Innenraum des sich ergebenden Gehäuses, insbesondere in dem Gehäuseteil, welcher den kreisrunden Dichtungssteg aufweist, stegförmige Positionierhilfen angeordnet, die insbesondere abschnittsweise einer äußeren Kontur des einzusetzenden Filterelements nachempfunden sind.

Die Positionierhilfen können in der Art von Halteflächen ferner als Verdrehsicherung wirken, so dass einerseits nur ein passendes konisch zulaufendes Filterelement mit einem dreieckigen Querschnitt eingesetzt werden kann, und andererseits das Filterelement nur in der richtigen Orientierung im Gehäuse bzw. an den Positionierhilfen z.B. formschlüssig anliegen kann. Die Wirkung als Verdrehsicherung ist insbesondere auch im Betrieb der Vorrichtung von Bedeutung. Durch die exzentrische Lagerung des Filterelements an den kreisrunden Dichtstegen ist ein Rotieren des Filterelements im Betrieb, insbesondere verursacht durch Vibrationen im Betrieb wahrscheinlicher als bei einer zentrischen Lagerung oder zentrischen Anordnung der Dichtung. Dies ist jedoch aufgrund der Form des Filterelements unerwünscht, da ein Verdrehen die Strömungsbedingungen im Filtergehäuse negativ verändern würde. Die Positionierhilfen verhindern auch wirkungsvoll ein Rotieren des Filterelements im Betrieb.

Jedes der oben genannten Merkmale kann sich vorteilhaft in Bezug auf eine gleichmäßige Umströmung des Filterelements auswirken, was sich wiederum vorteilhaft auf eine gleichmäßige Beladung und damit auf die Standzeit des Filterelements auswirken kann. Bevorzugt sind jedoch mehrere der genannten Merkmale wie in dem unten geschilderten Ausführungsbeispiel kombiniert, so dass durch ein Zusammenwirken der einzelnen Maßnahmen eine optimale Anströmung und damit eine optimale Abscheideleistung auf kleinem Bauraum erreicht werden können.

Die Erfindung umfasst ferner eine Filteranordnung mit einem Gehäuse und einem darin eingesetzten Filterelement.

Die Erfindung umfasst ferner ein Verfahren zum Austausch eines Filterelements in einem Gehäuse. Das Verfahren zum Wechseln eines erfindungsgemäßen Luftfilterelements umfasst die Schritte: a) Entnahme eines Filterelements, b) Einbau eines erfindungsgemäßen Filterelements, wobei die Dichtung des Filterelements dichtend in Eingriff mit einem Dichtungsflansch des Gehäuses gebracht wird und das Filterelement im Bereich einer Endscheibe in insbesondere als Positionierhilfen ausgebildete Stege eingreift, derart, dass ein Rotieren des Filterelements verhindert wird.

Zum Einbau des Filterelements in das Gehäuse wird das Filterelement bevorzugt mit dem Dichtungssteg auf den Dichtungssteg des Gehäuses aufgesteckt, wobei entweder die Dichtung des Filterelements in den Dichtungssteg des Gehäuses eingreift und mit einer radial äußeren Dichtfläche gegen den Dichtungssteg abdichtet oder aber der Dichtungssteg des Gehäuses in die Dichtung des Filterelements eingreift und die Dichtung mit einer radial inneren Dichtfläche gegen den Dichtungssteg abdichtet. Anschließend wird die Gehäusehälfte insbesondere mit den Schnallen an der Gehäusehälfte befestigt und damit das Gehäuse geschlossen.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1 eine perspektivische Ansicht eines Gehäuses, an dem Zyklonfilterstufen und in dem ein Luftfilterelement vorgesehen sind, gemäß einem ersten Ausführungsbeispiel;
Fig. 2 eine perspektivische schematische Ansicht eines ersten Gehäuseteils des Gehäuses zur Aufnahme eines Luftfilterelementes an einem Zyklonfilter gemäß dem Ausführungsbeispiel aus Fig. 1;
Fig. 3 eine perspektivische schematische Ansicht eines Luftfilterelementes gemäß dem Ausführungsbeispiel aus Fig. 1;
Fig. 4 eine Draufsicht eines Gehäuseteils mit eingebautem Filterelement; und
Fig. 5 eine Draufsicht eines zweiten Gehäuseteils mit eingebautem Filterelement; und
Fig. 6 einen Schnitt analog zu Fig. 5 in der Ebene einer Mittelachse einer Zyklonfilterstufe.

In den Figuren bezeichnen dieselben Bezugszeichen gleiche oder funktionsgleiche Elemente, soweit nichts Gegenteiliges angegeben ist.

### Ausführungsform(en) der Erfindung

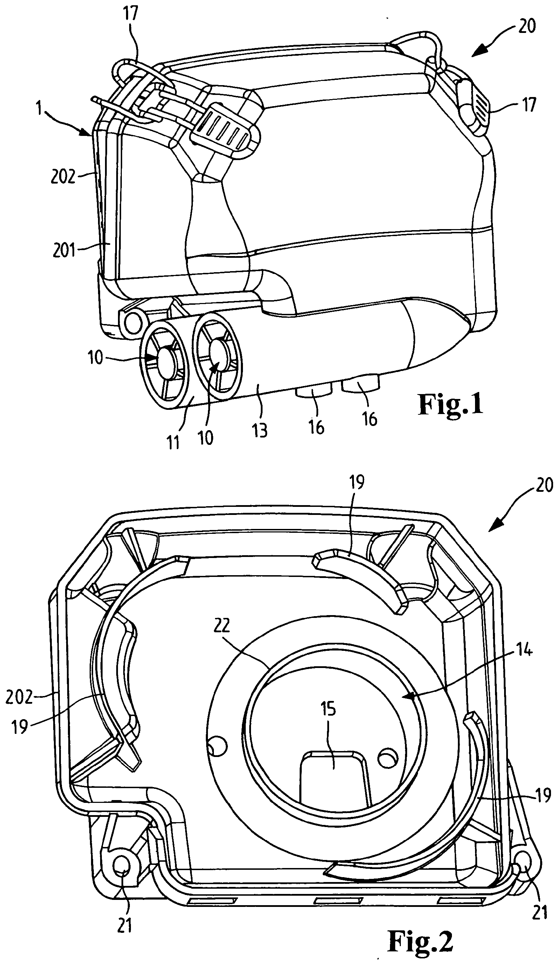

Fig. 1 zeigt eine perspektivische Ansicht eines Ausführungsbeispiels einer Filteranordnung mit einem Gehäuse 20, an dem zwei Zyklonfilterstufen 11, 13 angeordnet oder integriert sind, und mit einem in dem Gehäuse eingesetzten Luftfilterelement 1. Das Gehäuse 20 besteht aus zwei Gehäuseteilen 201 und 202, welche mit Hilfe einer Schnalle 17 aneinandergehalten werden.

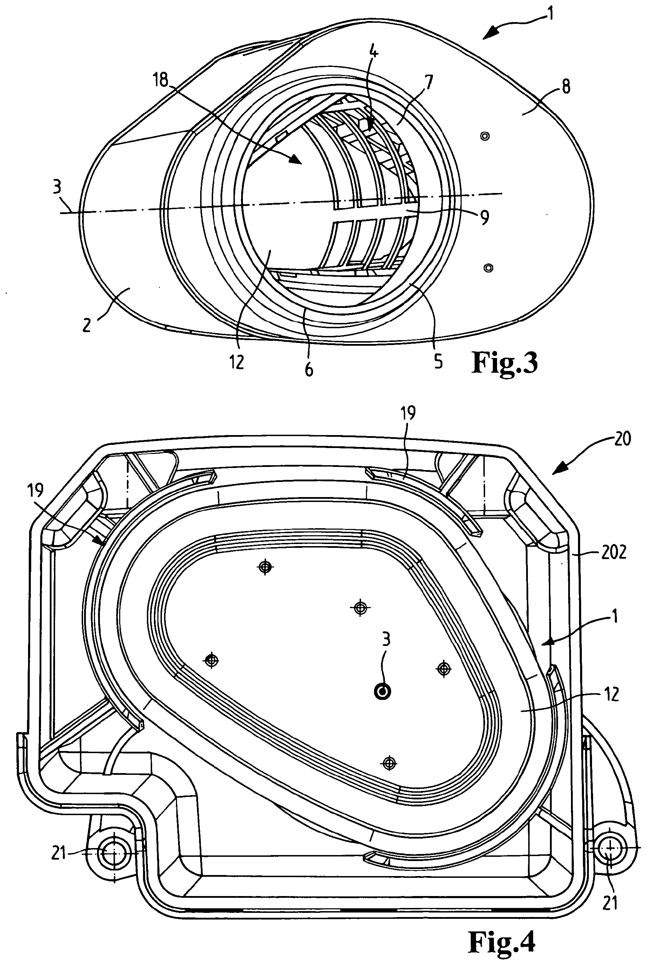

Unten im Bild sind Lufteinlassöffnungen 10 für die beiden Zyklonfilterstufen 11, 13, welche in dem vorderen Gehäuseteil 201 integriert sind, dargestellt. Durch die Lufteinlassöffnungen 10 werden von Partikeln zu filternde Luft in den jeweiligen Zyklonfilter 11, 13 gefördert. Nach der Vorfilterung wird die Luft durch das in dem Gehäuse 20 angeordnete Luftfilterelement, wie es z.B. in Figur 3 näher dargestellt ist, getrieben. Der jeweilige Zyklonfilter 11, 13 ist links im Bild an einem Gehäuse 20 angeordnet dargestellt, das ein Luftfilterelement 1 abdeckt. Nach dem Einsaugen der Luft in den Zyklonfilter 11, 13 werden zunächst Partikel aus der Luft mittels einer Zyklonabscheidung abgeschieden. Die Partikel werden an den Abscheideöffnungen 16, welche unterseitig angeordnet sind, in die Umgebung zurückgeführt.

Die Luft wird dann durch das den Zyklonfilterstufen 11, 13 nachgeschaltete Luftfilterelement 1 geleitet. Dabei werden weitere Partikel aus der Luft entfernt. Die so mehrstufig von Partikeln gereinigte Luft wird anschließend durch die in der Figur 1 verdeckt an der hinteren Seite vorgesehene Luftauslassöffnung 13 abgegeben. In Figur 2 ist ein geöffnetes Gehäuse 20 dargestellt, welches die Austrittsöffnung 13 zeigt. Durch die mehrstufige Filterung lässt sich bei vergleichbarem Aufwand eine bessere Filterleistung erzielen als durch einen Zyklonabscheider alleine. Dies ist im Falle eines Einsatzes bei der Luftfilterung der Zuluft zu dem Verbrennungsraum eines Verbrennungsmotors, beispielsweise von einem Landfahrzeug, für die Lebensdauer des Verbrennungsmotors vorteilhaft.

Fig. 2 zeigt eine perspektivische schematische Ansicht eines Gehäuses 20 zur Aufnahme eines Luftfilterelementes 1. Dabei sind die Zyklonfilterstufen 11, 13 an einem Gehäuseteil 201 wie in Fig. 1 angeordnet und daher in Figur 2 nicht sichtbar. Das Gehäuse 20 weist innenseitig am Gehäuseteil 202 einen kreisrunden Dichtungssteg 22 auf, an dem ein eingesetztes Filterelement (in Fig. 2 nicht dargestellt) im montierten Zustand insbesondere radial von außen oder innen dicht zum Anliegen kommt. Die durch das Luftfilterelement 1 gefilterte Luft wird durch den Luftaustritt 15 gereinigt abgeleitet. Der Gehäuseteil 202 bildet eine Abdeckung für das Luftfilterelement 1 und den in Figur 1 vorderseitig sichtbaren Gehäuseteil 201. Das Gehäuse 20 kann mit Hilfe von Anschraubpunkten 21 befestigt werden.

Im Innenraum des sich ergebenden Gehäuses 20 sind Positionierhilfen 19 an dem Gehäuseteil 202 und/oder dem Gehäuseteil 201 angeordnet, die einer äußeren Kontur des einzusetzenden Filterelements nachempfunden sind. Die Positionierhilfen 19 in der Art von Halteflächen wirken ferner als Verdrehsicherung, so dass einerseits nur ein passendes konisch zulaufendes Filterelement mit einem dreieckigen Querschnitt eingesetzt werden kann, und andererseits das Filterelement nur in der richtigen Orientierung im Gehäuse bzw. an den Positionierhilfen 19 formschlüssig anliegen kann. Die Wirkung als Verdrehsicherung ist insbesondere im Betrieb der Vorrichtung von Bedeutung. Durch die exzentrische Lagerung des Filterelements an den insbesondere kreisrunden Dichtstegen 7, 22 ist ein Rotieren des Filterelements im Betrieb, insbesondere verursacht durch Vibrationen im Betrieb wahrscheinlicher als bei einer zentrischen Lagerung oder zentrischen Anordnung der Dichtung. Dies ist jedoch aufgrund der Form des Filterelements 1 unerwünscht, da ein Verdrehen die Strömungsbedingungen im Filtergehäuse 20 negativ verändern würde. Die Positionierhilfen verhindern auch wirkungsvoll ein Rotieren des Filterelements im Betrieb.

Fig. 3 zeigt eine perspektivische schematische Ansicht eines Luftfilterelementes 1 für ein Gehäuse, wie es in Fig. 1 und 2 gezeigt ist. Das Luftfilterelement 1 weist ein Filtermedium 2 auf, durch das die Luft zum Filtern geleitet wird. Partikel lagern sich dabei am Filtermedium 2 ab. Das Filtermedium 2 weist bei diesem Ausführungsbeispiel einen Querschnitt eines gerundeten Dreiecks auf, das sich um eine Längserstreckungsachse 3 des Filtermediums 2 herum erstreckt. Das Filtermedium 2 ist als Endlosfaltenbalg zwischen einer oberen (Deckelendscheibe) 8 und unteren Endscheibe 12 angeordnet. Die Endscheiben 8, 12 sind fluidddicht ausgestaltet und entlang der Längserstreckungsachse 3 voneinander beabstandet. Das Filterelement erstreckt sich derart konisch bzw. in Form eines Kegelstumpfes entlang der Längserstreckungsachse 3, dass die vom Endlosfaltenbalg umschlossene Fläche auf der Seite der Deckelendscheibe 8 größer ist als auf der Seite der zweiten, unteren Endscheibe 12. Die Deckelendscheibe weist damit auch eine größere Fläche auf als die untere, zweite Endscheibe 12. Das Filtermedium 2 ist z.B. aus Filtervlies, Cellulose oder Papier gefertigt. In Kombination mit dem Gehäuse 20 strömt von den Zyklonfilterstufen 11, 13 vorgereinigte Luft in einen Zwischenraum zwischen der Außenseite des Filtermediums 2 und der Innenseite der Gehäuseteile 201, 202. Die vorgereinigte Luft durchströmt dann das Filtermedium 2 und tritt durch die von einer Dichtung 5 umschlossenen Öffnung 18 als Reinfluid aus.

Formstabile Verstärkungsrippen 4 werden von dem Filtermedium 2 umschlossen und stabilisieren das Filtermedium 2 in seiner Form. Das Filtermedium 2 ist beispielsweise mit den Verstärkungsrippen 4 verklebt. Die Verstärkungsrippen 4 stützen das Filtermedium 2 in und gegen eine Durchströmrichtung der Luft ab und tragen zur Formstabilität des Filtermediums 2 bei. Das Luftfilterelement 1 wird axial endseitig der Längserstreckungsachse 3 von einer als Deckelendscheibe bezeichneten Endscheibe 8 begrenzt. Die Deckelendscheibe 8 weist einen bei diesem Ausführungsbeispiel kreisrunden Dichtungssteg 7 mit einer äußeren radialen Dichtfläche 6 auf. Die durch den Dichtungssteg 7 gebildete Öffnung stellt die Ausströmöffnung des Filterelements für die durch das Filtermedium 2 gefilterte Luft dar. Mittels der Dichtfläche 6 kann das Luftfilterelement 1 dicht am Gehäuse 20 (in Fig. 3 nicht dargestellt) angeschlossen werden. Beispielsweise ist dazu an dem Gehäuse 20 ein entsprechender Stutzen 14, wie er in der Figur 1 dargestellt ist, vorgesehen. Durch den Stutzen 14 gelang die gereinigte Luft zum jeweiligen Verbrennungsmotor. Der Dichtungssteg 7 bzw. die durch ihn definierte Ausströmöffnung befindet sich nicht in der geometrischen Mitte des Filterelements 1 oder im Bereich des Flächenschwerpunkts der Deckelendscheibe 8, sondern ist von der geometrischen Mitte und/oder dem Flächenschwerpunkt beabstandet angeordnet. In dem gezeigten Ausführungsbeispiel ist der Dichtungssteg 7 bzw. die durch ihn definierte Ausströmöffnung in Richtung einer abgerundeten Ecke des durch das Filterelement 1 gebildeten Dreiecks oder dreieckähnlichen Ovals verschoben, insbesondere so, dass der Dichtungssteg 7 an die äußere Umrandung der Deckelendscheibe 8 heranreicht, diese aber nicht überragt. Durch diese Anordnung kann ein exzentrischer Luftauslass aus einem Filtergehäuse erreicht und gleichzeitig der für das Filtergehäuse zur Verfügung stehende Bauraum bestmöglich mit Filterfläche gefüllt werden. Ferner kann auf diese Weise der Dichtungssteg 7 bzw. die durch ihn definierte Ausströmöffnung des Filterelements 1 und damit auch die Auslassöffnung 15 des Gehäuses 20 näher zum Austrittsbereich 62 der Zyklonfilterstufen 11, 13 angeordnet werden, was einerseits Vorteile bei der optimalen Ausnutzung von begrenzten Bauräumen und andererseits Vorteile in Bezug auf den Druckverlust des Gesamtsystems haben kann. Durch die kreisrunde Ausführung der Dichtung 5 kann eine gute und zuverlässige Abdichtung sicher gestellt werden.

Bevorzugt ist eine Dichtung 5 vorgesehen, die zumindest teilweise aus einem elastischen Material hergestellt ist. An der Dichtung 5 ist die insbesondere radiale Dichtfläche 6 vorgesehen. Die radiale Abdichtung ermöglicht eine besonders gute Abdichtung, die auch bei fehlendem axialen Anpressdruck des Luftfilterelements 1 an das Gehäuse 20 eine dichte Verbindung von Luftfilterelement 1 und Gehäuse 20 ermöglicht. Ein formstabiles radial luftdurchlässiges Mittelrohr 9 stützt bei diesem Ausführungsbeispiel den Dichtungssteg 7 ab und erhöht die Stabilität. Das Luftfilterelement 1 lässt sich durch den kreisrunden Dichtungssteg 7 mit einer radial wirkenden äußeren Dichtfläche 6 oder einer radial wirkenden inneren Dichtfläche 60 einfach und dauerhaft dicht im Gehäuse 20 anbringen. Durch die von den Schnallen 17 gehaltenen Gehäuseteile 201, 202 wird das eingesetzte Filterelement 1 beispielsweise mit Hilfe eines Klemmschlusses fest gehalten, und die Dichtung 5 schließt fluiddicht mit dem Anschlussstutzen 14 ab.

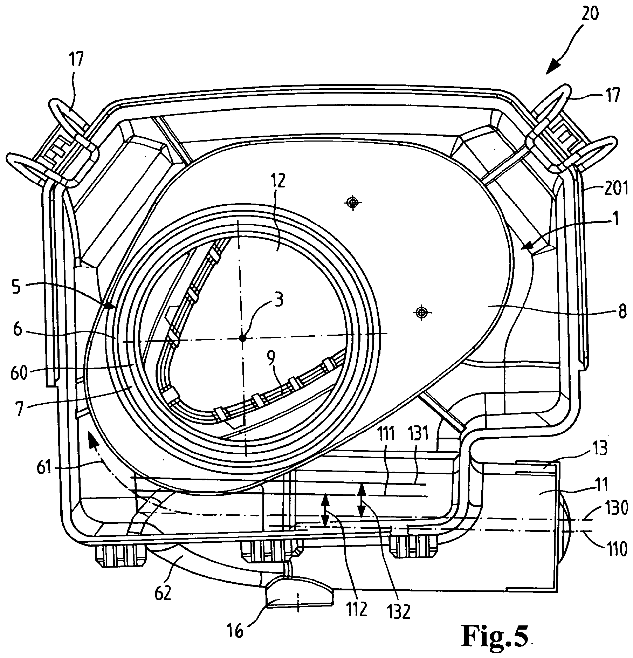

Fig. 4 - 6 zeigen jeweils eine Draufsicht auf die Gehäuseteile 202, 201 des Gehäuses 20 mit eingebautem Filterelement 1, wobei die Gehäusehälften 201, 202 zu einem Gehäuse 20 insbesondere gemäß dem Ausführungsbeispiel nach Fig. 1 verbindbar sind. Fig. 4 zeigt dabei die in Fig. 2 gezeigte Gehäusehälfte 202 und Fig. 5 die Gehäusehälfte 201, jeweils mit darin angeordnetem Filterelement 1. Zum Einbau des Filterelements 1 in das Gehäuse 20 wird das Filterelement mit dem Dichtungssteg 7 auf den Dichtungssteg 22 des Gehäuses aufgesteckt, wobei entweder (hier nicht sichbar) die Dichtung 5 des Filterelements 1 innen in den Dichtungssteg 22 des Gehäuses eingreift und mit einer radial äußeren Dichtfläche gegen den Dichtungssteg 22 abdichtet oder aber der Dichtungssteg 22 des Gehäuses 20 innen in die Dichtung 5 des Filterelements 1 eingreift und die Dichtung 5 mit einer radial inneren Dichtfläche 60 gegen den Dichtungssteg 22 abdichtet. Anschließend wird die Gehäusehälfte 201 insbesondere mit den Schnallen 17 an der Gehäusehälfte 202 befestigt und damit das Gehäuse geschlossen.

Die Zyklonfilterstufen 11, 13 sind in einer oder in beiden Gehäusehälften 201, 202 angeordnet und insbesondere durch mehrere, bevorzugt zwei nebeneinander angeordnete Inline-Zyklonzellen gebildet, die axial entlang der Mittelachsen 130, 110 durchströmt werden, wobei im Inneren der Inline-Zyklonzellen durch ein an den Lufteinlassöffnungen 10 angeordnetes Leitwerk eine schraubenförmige Strömung erzeugt wird, durch welche in der Luft enthaltene Partikel nach außen bewegt und dort abgeschieden werden. Das Filterelement 1 ist insbesondere so im Gehäuse angeordnet, dass die aus mindestens einer, bevorzugt aus beiden der Zyklonfilterstufen 11, 13 austretende Luftströmung insbesondere entlang des schematisch dargestellten Strömungswegs 61 insbesondere tangential auf die abgerundete Ecke des Filtermediums 2 trifft, welchem die durch den Dichtungssteg 7 des Filterelements 1 definierte Ausströmöffnung am nächsten ist, d.h. in Richtung welcher die Ausströmöffnung verschoben ist. Als tangential ist dabei insbesondere jede Konfiguration zu verstehen, bei welcher die Mittelachsen der Zyklonzellen parallel zu einer Tangente eines insbesondere gekrümmten Bereiches des ringförmig geschlossenen Filterbalges verlaufen.

Dabei trifft bevorzugt ein Teil des aus einer Zyklonzelle austretenden Luftstroms direkt auf das Filtermedium im betreffenden Bereich. Weiter bevorzugt ist dabei die Mittelachse der Zyklonfilterstufen 11, 13 radial von der zu ihr parallelen Tangente des Filterelements 1 nach außen beabstandet. Bevorzugt sind mehrere Zyklonzellen 11, 13 über die axiale Erstreckung des Filterelements zwischen Deckelendscheibe 8 und Endscheibe 12 so nebeneinander angeordnet, dass durch den durch die Zyklonzellen austretenden Luftstrom der Bereich des Filteremdiums 2 zwischen Endscheibe 12 und Deckelendscheibe 8 im Wesentlichen vollständig überdeckt ist. Für ein konisches Filterelement in Form eines Kegels oder Kegelstumpfes sind die Zyklonfilterstufen 11, 13 ferner so angeordnet, dass deren Mittelachsen 130, 110 den gleichen Abstand 132, 112 zum Filtermedium, d.h. insbesondere den gleichen Abstand zu den in den jeweiligen parallel zu den Endscheiben angeordneten Ebenen liegenden Tangenten 131, 111 des Filtermediums 2 oder Filterbalges aufweisen. Der Austrittsbereich 62 der Zyklonfilterstufen 11, 13 ist in dem Bereich, in dem die aus den Zyklonfilterstufen austretende Luft auf das Filterelement 1 trifft, in Richtung des Filterelements 1 gebogen ausgestaltet. Jedes der hier genannten Merkmale kann sich vorteilhaft in Bezug auf eine gleichmäßige Umströmung des Filterelements 1 auswirken, was sich wiederum vorteilhaft auf eine gleichmäßige Beladung und damit auf die Standzeit des Filterelements auswirken kann. Bevorzugt sind jedoch die genannten Merkmale wie in dem geschilderten Ausführungsbeispiel kombiniert, so dass durch ein Zusammenwirken der einzelnen Maßnahmen eine optimale Anströmung und damit eine optimale Abscheideleistung auf kleinem Bauraum erreicht werden können.

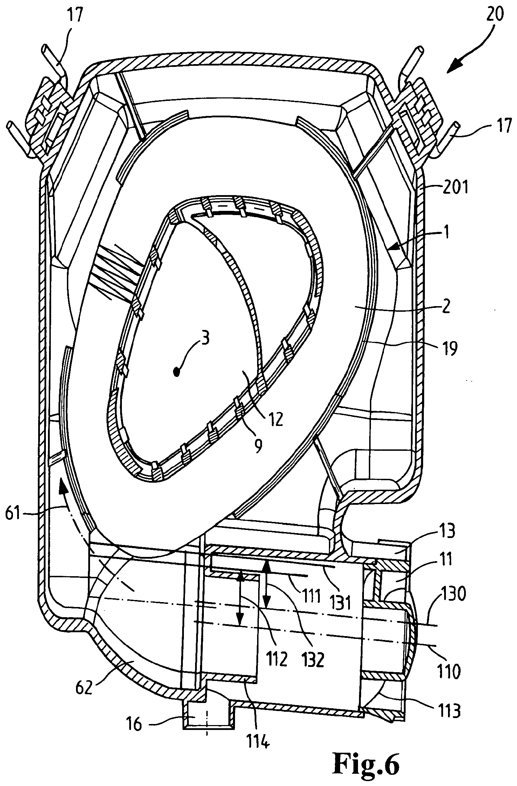

Fig. 6 zeigt eine Schnittansicht der in Fig. 5 gezeigten Anordnung, wobei die Schnittebene parallel zur Betrachtungsebene der Fig. 5 durch die Mittelahcse 110 der dem Betrachter zugewandten Zyklonfilterstufe 11 verläuft. Die Zyklonfilterstufe 11 und 13 sind jeweils als rohrförmige Inline-Zyklonzellen ausgebildet, die axial entlang ihrer Mittelachsen 110, 130 durchströmt werden. Dabei wird im Inneren der Inline-Zyklonzellen bevorzugt durch ein an den Lufteinlassöffnungen angeordnetes Leitwerk 113 eine schraubenförmige Strömung erzeugt, durch welche in der Luft enthaltene Partikel nach radial außen bewegt und dort mittels des Tauchrohrs 114 abgeschieden werden. In diesem Schnitt sind auch Positionierhilfen 19 in der Art von Halteflächen sichtbar, die ferner als Verdrehsicherung wirken können und bevorzugt an der Innenwand der Gehäusehälfte 201 vorgesehen sind. Im Übrigen sind gleiche Merkmale mit gleichen Bezugszeichen versehen.

## Patentansprüche

1. Luftfilterelement (1) für einen Verbrennungsmotor mit einem Filtermedium (2), einer Ausströmöffnung und einer Dichtung (5) zum dichten Anschließen an ein Gehäuse (20), wobei das Filtermedium (2) einen im Wesentlichen dreiecksförmigen Ringquerschnitt mit abgerundeten Ecken aufweist, der sich um seine Längserstreckungsachse (3) erstreckt und in Richtung seiner Längserstreckungsachse (3) konisch ausgebildet ist, wobei die Ausströmöffnung exzentrisch in einer Deckelendscheibe (8) angeordnet ist und die Dichtung (5) kreisrund gestaltet und von dem Flächenschwerpunkt der Deckelendscheibe (8) beabstandet in Richtung einer abgerundeten Ecke des durch das Filterelement (1) gebildeten Dreiecks verschoben ist.

2. Luftfilterelement (1) nach Anspruch 1, **dadurch gekennzeichnet, dass** die Dichtung (5) eine radiale innere oder äußere Dichtfläche (6) aufweist.

3. Luftfilterelement (1) nach einem der Ansprüche 1-2, **dadurch gekennzeichnet, dass** das Filtermedium (2) wenigstens bereichsweise sterngefaltet ist.

4. Luftfilterelement (1) nach einem der Ansprüche 1-3, **dadurch gekennzeichnet, dass** Verstärkungsrippen (4) derart vorgesehen sind, dass sie von dem Filtermedium (2) eingefasst werden.

5. Luftfilterelement (1) nach einem der Ansprüche 1-4, **dadurch gekennzeichnet, dass** die Dichtung (5) an einem Dichtungssteg (7) angeordnet ist, der die Dichtung (5) abstützt.

6. Luftfilterelement (1) nach Anspruch 5, **dadurch gekennzeichnet, dass** der Dichtungssteg (7) mit den Verstärkungsrippen (4) gekoppelt ist.

7. Luftfilterelement (1) nach einem der Ansprüche 1-6, **dadurch gekennzeichnet, dass** axialseitig wenigstens eine im Wesentlichen formstabile Deckelendscheibe (8) so vorgesehen ist, dass sie axial dichtend an dem Filtermedium (2) angeordnet ist.

8. Luftfilterelement (1) nach Anspruch 7, **dadurch gekennzeichnet, dass** der Dichtungssteg (7) an die äußere Umrandung der Deckelendscheibe (8) heranreicht.

9. Luftfilterelement (1) nach Anspruch 8, **dadurch gekennzeichnet, dass** der Dichtungssteg (7) die Deckelendscheibe (8) nicht überragt.

10. Luftfilterelement (1) nach einem der Ansprüche 1-9, **dadurch gekennzeichnet, dass** ein radial luftdurchlässiges, formstabiles Mittelrohr (9) vorgesehen ist, das von dem Filtermedium (2) umschlossen wird.

11. Gehäuse (20) zur dichten Verbindung von einer Zyklonfilterstufe (11, 13) und einem Luftfilterelement (1) nach einem der Ansprüche 1-10, wobei das Luftfilterelement (1) mit seiner Dichtung (5) an einem Dichtungsflansch (22) des Gehäuses (20) radial dichtend anlegbar ist und mit Hilfe des Gehäuses (20) derart an der Zyklonfilterstufe (11, 13) vorsehbar ist, dass mit Hilfe der Zyklonfilterstufe (11, 13) vorgereinigte Luft durch das Filtermedium (2) zu einer Auslassöffnung (15) des Gehäuses (1) geleitet wird.

12. Luftfiltersystem umfassend ein Gehäuse nach Anspruch 11 und ein Luftfilterelement nach einem der Ansprüche 1-10.

13. Luftfiltersystem nach Anspruch 12, wobei die Ausströmöffnung des Filterelements derart exzentrisch angeordnet ist, dass sie, insbesondere in einer Ebene senkrecht zur Längserstreckungsrichtung (3) des Filterelements betrachtet, dem Austrittsbereich (62) der Zyklonfilterstufen näher ist als der Flächenschwerpunkt der Deckelendscheibe.

14. Verfahren zum Wechseln eines Luftfilterelements (1) nach einem der Ansprüche 1-10 in einem Gehäuse (20) nach Anspruch 11, umfassend die Schritte a) Entnahme eines Filterelements, b) Einbau eines Filterelements nach einem der Ansprüche 1-10, wobei die Dichtung des Filterelements dichtend in Eingriff mit einem Dichtungsflansch des Gehäuses gebracht wird und das Filterelement im Bereich einer Endscheibe in insbesondere als Positionierhilfen ausgebildete Stege (19) eingreift, derart, dass ein Rotieren des Filterelements verhindert wird.

## Claims

1. Air filter element (1) for an internal combustion engine with a filter medium (2), an outflow opening and a gasket (5) for a sealing connection to a housing (20), wherein the filter medium (2) features a substantially triangular annular cross-section with rounded corners which extends around its longitudinally extending axis (3) and which has a conical design in the direction of its longitudinally extending axis (3), wherein the outflow opening is arranged eccentrically in a flat end disk (8) and the gasket (5) is circular and, spaced apart from the centroid of an area of the flat end disk (8), displaced in the direction of a rounded corner of the triangle formed by the filter element (1).

2. Air filter element (1) according to claim 1, **characterized in that** the gasket (5) features a radial inner or outer sealing surface (6).

3. Air filter element (1) according to one of the claims 1 to 2, **characterized in that** the filter medium (2) is star-pleated in at least some areas.

4. Air filter element (1) according to one of the claims 1 to 3, **characterized in that** reinforcing ribs (4) are provided in such a way that they are enclosed by the filter medium (2).

5. Air filter element (1) according to one of the claims 1 to 4, **characterized in that** the gasket (5) is disposed at a sealing web (7) which supports the gasket (5).

6. Air filter element (1) according to claim 5, **characterized in that** the sealing web (7) is coupled with the reinforcing ribs (4).

7. Air filter element (1) according to one of the claims 1 to 6, **characterized in that** on the axial side at least one substantially dimensionally stable flat end disk (8) is provided in such a way that it is disposed at the filter medium (2) in an axially sealing manner.

8. Air filter element (1) according to claim 7, **characterized in that** the sealing web (7) reaches up to the outer edge of the flat end disk (8).

9. Air filter element (1) according to claim 8, **characterized in that** the sealing web (7) does not protrude beyond the flat end disk (8).

10. Air filter element (1) according to one of the claims 1 to 9, **characterized in that** a radially air-permeable, dimensionally stable central tube (9) is provided which is enclosed by the filter medium (2).

11. Housing (20) for a sealed connection of a cyclone filter stage (11, 13) with an air filter element (1) according to one of the claims 1 to 10, wherein the air filter element (1) with its gasket (5) can be applied radially sealingly to a sealing flange (22) of the housing (20) and provided by means of the housing (20) at the cyclone filter stage (11, 13) in such a way that by means of the cyclone filter stage (11, 13) pre-cleaned air is directed through the filter medium (2) to an outlet opening (15) of the housing (1 [sic?]).

12. Air filter system comprising a housing according to claim 11 and an air filter element according to one of the claims 1 to 10.

13. Air filter system according to claim 12, wherein the outflow opening of the filter element is eccentrically arranged in such a way that, in particular viewed in a plane perpendicular to the longitudinal extension direction (3) of the filter element, it is closer to the outflow opening (62) of the cyclone filter stages than the centroid of an area of the flat end disk.

14. Method for changing an air filter element (1) according to one of the claims 1 to 10 in a housing (20) according to claim 11, comprising the steps a) removal of a filter element, b) mounting of a filter element according to one of the claims 1 to 10, wherein the gasket of the filter element engages sealingly with a sealing flange of the housing and the filter element engages in the area of an end disk in webs (19) designed in particular as positioning devices in such a way that a rotation of the filter element is avoided.

## Revendications

1. Élément de filtre à air (1) pour un moteur à combustion interne avec un milieu filtrant (2), un orifice d'évacuation et un joint (5) pour un raccordement étanche à un boîtier (20), le milieu filtrant (2) présentant une section annulaire essentiellement de forme triangulaire avec des coins arrondis qui s'étend autour de son axe d'extension longitudinal (3) et qui est de forme conique dans le sens de son axe d'extension longitudinal (3), l'orifice d'évacuation étant disposé de manière excentrique dans un couvercle de disque d'extrémité (8) et le joint (5) étant de forme circulaire et, espacé du centre de gravité de la surface du couvercle de disque d'extrémité (8) déplacé dans le sens d'un coin arrondi du triangle formé par l'élément filtrant (1).

2. Élément de filtre à air (1) selon la revendication 1, **caractérisé en ce que** le joint (5) présente une surface d'étanchéité (6) radiale intérieure et extérieure.

3. Élément de filtre à air (1) selon l'une des revendications 1 à 2, **caractérisé en ce que** le milieu filtrant (2) est plié en étoile au moins dans certaines zones.

4. Élément de filtre à air (1) selon l'une des revendications 1 à 3, **caractérisé en ce que** des nervures de renfort (4) sont prévues de sorte qu'elles sont bordées par le milieu filtrant (2).

5. Élément de filtre à air (1) selon l'une des revendications 1 à 4, **caractérisé en ce que** le joint (5) est disposé sur une nervure d'étanchéité (7) qui supporte le joint (5).

6. Élément de filtre à air (1) selon la revendication 5, **caractérisé en ce que** la nervure d'étanchéité (7) est accouplée aux nervures de renfort (4).

7. Élément de filtre à air (1) selon l'une des revendications 1 à 6, **caractérisé en ce que** du côté axial au moins un couvercle de disque d'extrémité (8) essentiellement indéformable est prévu de sorte qu'il est disposé sur le milieu filtrant (2) en assurant une étanchéité axiale.

8. Élément de filtre à air (1) selon la revendication 7, **caractérisé en ce que** la nervure d'étanchéité (7) s'étend jusqu'à la bordure du couvercle de disque d'extrémité (8).

9. Élément de filtre à air (1) selon la revendication 8, **caractérisé en ce que** la nervure d'étanchéité (7) ne dépasse pas le couvercle de disque d'extrémité (8).

10. Élément de filtre à air (1) selon l'une des revendications 1 à 9, **caractérisé en ce qu'**un tube central (9) perméable à l'air et indéformable est prévu qui est entouré par le milieu filtrant (2).

11. Boîtier (20) pour un raccordement étanche d'un étage de filtre cyclonique (11, 13) avec un élément de filtre à air (1) selon l'une des revendications 1 à 10, l'élément de filtre à air (1) avec son joint (5) pouvant être appliqué de manière étanche en sens radial sur une bride d'étanchéité (22) du boîtier (20) et pouvant être prévu avec l'aide du boîtier (20) sur l'étage de filtre cyclonique (11, 13) de sorte qu'avec l'aide de l'étage de filtre cyclonique (11, 13) de l'air pré-traité est guidé à travers le milieu filtrant (2) vers une tubulure de sortie (15) du boîtier (1 [sic?]).

12. Système de filtre à air comprenant un boîtier selon la revendication 11 et un élément de filtre à air selon l'une des revendications 1 à 10.

13. Système de filtre à air selon la revendication 12, l'orifice d'évacuation de l'élément filtrant étant disposé de manière excentrique de sorte qu'il est plus proche de la zone de sortie (62) des étages de filtre cyclonique que le centre de gravité de la surface du couvercle de disque d'extrémité, notamment considéré dans un plan perpendiculaire par rapport au sens de l'extension longitudinale (3).

14. Procédé servant à changer un élément de filtre à air (1) selon l'une des revendications 1 à 10 dans un boîtier (20) selon la revendication 11, comprenant les étapes a) prélèvement d'un élément filtrant, b) montage d'un élément filtrant selon l'une des revendications 1 à 10, le joint de l'élément filtrant étant engagé de manière étanche avec une bride d'étanchéité du boîtier et l'élément filtrant s'engageant dans la zone d'un disque d'extrémité dans des nervures (19) réalisées notamment en tant qu'aides au positionnement de sorte qu'une rotation de l'élément filtrant est évitée.
